# EUROPÄISCHE PATENTANMELDUNG

(11) **EP 1 914 435 A1**
(43) Veröffentlichungstag der Anmeldung: **23.04.2008**
(21) Anmeldenummer: 07117630.9
(22) Anmeldetag: 01.10.2007
(51) Int. Cl.: F16D 48/06, B60W 10/02, B60K 31/00

(54) **Verfahren zur Überwachung eines Zustands einer Kupplung eines Kraftfahrzeugs mit Handschaltgetriebe**

(30) Priorität: 20.10.2006 DE 102006049536
(71) Anmelder: ROBERT BOSCH GMBH, 70442 Stuttgart (DE)
(72) Erfinder: Sarrazin, Roland, 70195, Stuttgart-Botnang (DE); Hoetzer, Dieter, Farmington Hills, MI 48331 (US); Hellmann, Manfred, 71706, Hardthof (DE); Kroehnert, Andre, 71672, Marbach (DE)

(57) **Zusammenfassung**

Die Erfindung betrifft ein Verfahren zur Überwachung eines Zustands einer Kupplung eines Kraftfahrzeugs (10) mit Handschaltgetriebe. Dabei wird wenigstens einer der nachfolgenden Zustände (Z1,Z2,Z3) der Kupplung erkannt:
- ein Abrutschen des Fahrers von dem Kupplungspedal (25), wenn eine Beschleunigung des Kupplungspedals über einem vorgegebenen Schwellwert liegt und/oder wenn ein bestimmter Signalverlauf des Kupplungswegsignals vorliegt (Z1);
- eine Wärmebelastung der Kupplung (23), wenn eine direkt gemessene und/oder mittels wenigstens eines Kupplungsmodells indirekt geschätzte Temperatur der Kupplung über eine vorgegebene Zeitdauer über einen vorgegebenen Schwellwert liegt und/oder wenn eine gemessene Steigung entlang einer durch das Kraftfahrzeug zurückgelegten Strecke über einem vorgegebenen Schwellwert liegt (Z2); und/oder
- ein fehlerhaftes Kupplungswegsignal mittels wenigstens einer Plausibilitätsprüfung (Z3).

## Beschreibung

### Stand der Technik

Die Erfindung betrifft ein Verfahren zur Überwachung eines Zustands einer Kupplung eines Kraftfahrzeugs mit Handschaltgetriebe. Des weiteren betrifft die Erfindung ein Computerprogramm und ein Computerprogrammprodukt, um ein derartiges Verfahren auszuführen sowie eine adaptive Geschwindigkeitsregelvorrichtung für Kraftfahrzeuge.

Für Kraftfahrzeuge sind Geschwindigkeitsregelsysteme bekannt, mit denen die Geschwindigkeit des Fahrzeugs auf eine von dem Fahrer gewählte Wunschgeschwindigkeit geregelt werden kann. Darüber hinaus kann mit Hilfe eines Abstandssensors, beispielsweise mit Hilfe eines Radar- oder Lidar-Sensors, der Abstand zu einem vorausfahrenden Fahrzeug gemessen werden. Die Geschwindigkeitsregelung wird dann so modifiziert, dass ein vorgegebener, vorzugsweise geschwindigkeitsabhängiger Abstand zu dem als Zielobjekt ausgewählten vorausfahrenden Fahrzeug eingehalten wird. Solche Systeme werden auch als adaptive Geschwindigkeitsregelvorrichtungen / -systeme bzw. ACC(Adaptive Cruise Control)-Systeme bezeichnet. In der Publikation der Robert Bosch GmbH "Adaptive Fahrgeschwindigkeitsregelung ACC, Gelbe Reihe, Ausgabe 2002, Technische Unterrichtung" sind derartige adaptive Geschwindigkeitsregelvorrichtungen beschrieben.

Da ein ACC-System in erster Linie dazu dient, den Fahrer zu entlasten und den Komfort zu erhöhen, werden diese Systeme häufig bei Fahrzeugen mit Automatikgetriebe eingesetzt, bei denen durch die automatische Wahl der Getriebestufe eine weitere Entlastung des Fahrers erreicht wird. Des weiteren sind Geschwindigkeitsregelsysteme oder, spezieller, ACC-Systeme auch bei Fahrzeugen mit Handschaltgetriebe bekannt, ebenso bei Fahrzeugen mit einem elektronischen Schaltgetriebe oder mit einem Automatikgetriebe, bei dem zwar die Kupplungs- und Gangwechselvorgänge automatisch ablaufen, aber der Fahrer die Wahl hat, durch einen von Hand eingegebenen Befehl selbst die Getriebestufe bzw. den Getriebegang zu bestimmen. Eine Geschwindigkeitsregelvorrichtung für Kraftfahrzeuge mit Handschaltgetriebe ist aus der DE 102 10 545 A1 bekannt.

Ein hoher Komfort wird bei derartigen Kraftfahrzeugen mit Handschaltgetriebe und manuell zu bedienendem Kupplungspedal dadurch erreicht, dass der Anfahrvorgang teilautomatisiert wird, d. h., dass die adaptive Geschwindigkeitsregelvorrichtung eine Anfahrhilfe bzw. -unterstützung bereitstellt, bei welcher der Fahrer lediglich das Kupplungspedal bedienen muss und die Ansteuerung des Kraftfahrzeugsantriebsmotors bzw. des Antriebsstrangs vollautomatisiert von dem Steuerungs- bzw. Regelungsverfahren der adaptiven Geschwindigkeitsregelvorrichtung übernommen wird. Da das Kupplungspedal bzw. der Kupplungswegsensor bei dieser Anwendung sozusagen wie ein elektronisches Gaspedal (sogenanntes "E-Gas") funktioniert, wäre für die Kupplung eine Überwachung im Sinne eines Missbrauchs- bzw. Fehlbedienungsschutzes wünschenswert. Auch eine Überprüfung des Kupplungswegsignals wäre sinnvoll. Bei genauerer Betrachtung der Funktionsweise der Kupplung in Kombination mit der adaptiven Geschwindigkeitsregelvorrichtung können insbesondere die folgenden Hauptprobleme auftreten:
1. Abrutschen des Fahrers vom Kupplungspedal: Bei einem ungewollten Abrutschen am Kupplungspedal während des Anfahrvorgangs legt das Kraftfahrzeug für den Fahrer noch ungewohnt viel Strecke zurück, da in diesem Fall das Antriebsmotormoment erhöht wird, bevor bzw. wenn überhaupt der Antriebsmotor abgewürgt wird.
2. Hohe Wärmebelastung der Kupplung: Bei einem zu langen Halten des Kraftfahrzeugs über die Kupplung am Berg wird die Kupplung ungewöhnlich stark belastet und im Extremfall durch die erhöhte Wärmebildung irreversibel geschädigt.
3. Fehlerhaftes Kupplungssignal: Bei einem falschen Kupplungswegsignal durch einen fehlerhaften Sensor oder eine fehlerhafte Signalübertragung basiert die Ansteuerung des Antriebsmotors des Kraftfahrzeugs eventuell auf falschen Annahmen. Dies kann zu für den Fahrer nicht nachvollziehbaren Systemreaktionen führen.

### Offenbarung der Erfindung

Ausgehend von diesen Überlegungen liegt der vorliegenden Erfindung die Aufgabe zugrunde, eine zuverlässige Überwachung eines Zustands einer Kupplung eines Kraftfahrzeugs mit Handschaltgetriebe mittels eines Verfahrens, eines Computerprogramms und eines Computerprogrammprodukts der eingangs erwähnten Art zu schaffen.

Diese Aufgabe wird erfindungsgemäß durch die in Anspruch 1 genannten Merkmale gelöst.

Durch die erfindungsgemäßen Maßnahmen werden kritische Sondersituationen der Kupplung des Kraftfahrzeugs zuverlässig, einfach und sicher mit geeigneten Hard- und Softwaremaßnahmen erkannt. Nach einer Erkennung einer Sondersituation können entsprechende Gegenmaßnahmen getroffen bzw. eingeleitet werden. Dabei wird wenigstens einer der nachfolgenden Zustände der Kupplung erkannt:
1. ein Abrutschen des Fahrers von dem Kupplungspedal, wenn eine Beschleunigung des Kupplungspedals über einem vorgegebenen Schwellwert liegt und/oder wenn ein bestimmter Signalverlauf des Kupplungswegsignals vorliegt;
2. eine Wärmebelastung der Kupplung, wenn eine direkt gemessene und/oder mittels wenigstens eines Kupplungsmodells indirekt geschätzte Temperatur der Kupplung über eine vorgegebene Zeitdauer über einem vorgegebenen Schwellwert liegt und/oder wenn eine gemessene Steigung entlang einer durch das Kraftfahrzeug zurückgelegten Strecke über einem vorgegebenen Schwellwert liegt; und/oder
3. ein fehlerhaftes Kupplungswegsignal mittels wenigstens einer Plausibilitätsprüfung.

Vorteilhafte Ausgestaltungen und Weiterbildungen der Erfindung ergeben sich aus den Unteransprüchen.

Erfindungsgemäß kann ferner vorgesehen sein, dass als Plausibilitätsprüfung zur Erkennung eines fehlerhaften Kupplungswegsignals bei vollem Auskuppeln ein Kraftstoffverbrauch überprüft wird. Bei einem vollen Auskuppeln wirkt auf den Antriebsmotor kein Kupplungsmoment. Kraftstoff wird also lediglich aufgrund der Leerlaufregelung eingespritzt. Zusätzlich benötigter Kraftstoff lässt auf einen anderen Kupplungszustand schließen.

Ebenfalls kann als Plausibilitätsprüfung zur Erkennung eines fehlerhaften Kupplungswegsignals eine Korrelation eines gemessenen Kupplungsschleifpunkts mit einem vorgegebenen Kupplungsschleifpunkt überprüft werden. Der Kupplungsschleifpunkt bzw. der Kupplungsweg, bei welchem die Kupplung zu schleifen beginnt, muss mit einem bestimmten vorgegebenen Kupplungsweg korrelieren. Der Schleifpunkt kann zusätzlich durch Beobachtung der Kraftstoffeinspritzmenge und der Drehzahlen erkannt werden. Abweichungen lassen auf ein fehlerhaftes Kupplungssignal schließen.

Des weiteren können als Plausibilitätsprüfung zur Erkennung eines fehlerhaften Kupplungswegsignals unrealistische Änderungen des Kupplungspedalwegs oder Beschleunigungen des Kupplungspedals berücksichtigt werden, beispielsweise durch unrealistische Beschleunigungswerte bzw. zu große Abstände zwischen zwei aufeinander folgenden Messwerten.

Bei einer Erkennung eines Abrutschens des Fahrers von dem Kupplungspedal kann bei Vorhandensein einer adaptiven Geschwindigkeitsregelvorrichtung ein sofortiges Abbrechen deren Antriebsmotormomentenvorgabe und/oder eine Ansteuerung des Bremssystems des Kraftfahrzeugs derart erfolgen, dass das Kraftfahrzeug - selbstverständlich nur in entsprechenden Fahrsituationen, d. h. insbesondere während des Anfahrvorgangs - zum Stillstand kommt oder im Stillstand verbleibt.

Vorteilhaft ist, wenn nach einer Erkennung einer Wärmebelastung der Kupplung oder eines fehlerhaften Kupplungswegsignals der Fahrer über eine geeignete Rückmeldung auf die Fehlbedienung, insbesondere mittels einer Ausgabeeinrichtung, insbesondere einer adaptiven Geschwindigkeitsregelvorrichtung, hingewiesen wird. Dies kann visuell, akustisch und/oder haptisch erfolgen. Alternativ oder zusätzlich kann bei Vorhandensein einer adaptiven Geschwindigkeitsregelvorrichtung an dem Kraftfahrzeug deren Anfahrunterstützungsfunktion deaktiviert werden. Durch diese Maßnahmen soll - neben den Sicherheits- bzw. Schutzaspekten - der Fahrer auch lernen, derartige hohe Kupplungsbelastungen zukünftig zu vermeiden. Ist ein irreversibler Schaden der Kupplung dennoch nicht vermeidbar, kann die Anfahrunterstützungsfunktion auch insbesondere temporär abgeschaltet werden, wobei ebenfalls eine geeignete Rückmeldung an den Fahrer ausgegeben wird. Der Fahrer kann auch bei einem erkannten Missbrauch des Haltens des Kraftfahrzeugs mit der Kupplung am Berg spezifischer darauf hingewiesen werden, dass der Anfahrtsregler nicht für das Stillstehen am Berg gedacht ist.

Das erfindungsgemäße Verfahren zur Überwachung eines Zustands einer Kupplung eines Kraftfahrzeugs mit Handschaltgetriebe ist vorzugsweise als Computerprogramm auf einer Steuereinrichtung der adaptiven Geschwindigkeitsregelvorrichtung, insbesondere einer ACC-Steuereinheit realisiert und kann dort im Rahmen eines Verfahrens zur Steuerung der adaptiven Geschwindigkeitsregelvorrichtung ablaufen, wobei auch andere Lösungen - wie beispielsweise eine Implementierung des Verfahrens auf einem Motorsteuergerät des Kraftfahrzeugs - selbstverständlich in Frage kommen. Dazu ist das Computerprogramm in einem Speicherelement der ACC-Steuereinheit gespeichert. Durch Abarbeitung auf einem Mikroprozessor des ACC-Steuereinheit wird das Verfahren ausgeführt. Das Computerprogramm kann auf einem computerlesbaren Datenträger (Diskette, CD, DVD, Festplatte, USB-Memorystick, Speicherkarte oder dergleichen) oder einem Internetserver als Computerprogrammprodukt gespeichert sein und von dort aus in das Speicherelement der ACC-Steuereinheit übertragen werden. Ein derartiges Computerprogramm bzw. Computerprogrammprodukt mit Programmcodemitteln ist in Anspruch 8 bzw. Anspruch 9 angegeben.

Anspruch 10 betrifft eine adaptive Geschwindigkeitsregelvorrichtung.

Nachfolgend sind anhand der Zeichnungen Ausführungsbeispiele der Erfindung prinzipmäßig beschrieben.

### Kurzbeschreibung der Zeichnung

Es zeigen:
Figur 1 eine schematische Darstellung der wesentlichen Komponenten eines ACC-Systems bzw. einer adaptiven Geschwindigkeitsregelvorrichtung in einem Kraftfahrzeug mit Handschaltgetriebe;
Figur 2 ein vereinfachtes Blockdiagramm von Komponenten eines ACC-Systems; und
Figur 3 ein vereinfachtes Blockdiagramm von möglichen Sondersituationen einer Kupplung mit entsprechenden Gegenmaßnahmen.

### Beschreibung von Ausführungsbeispielen

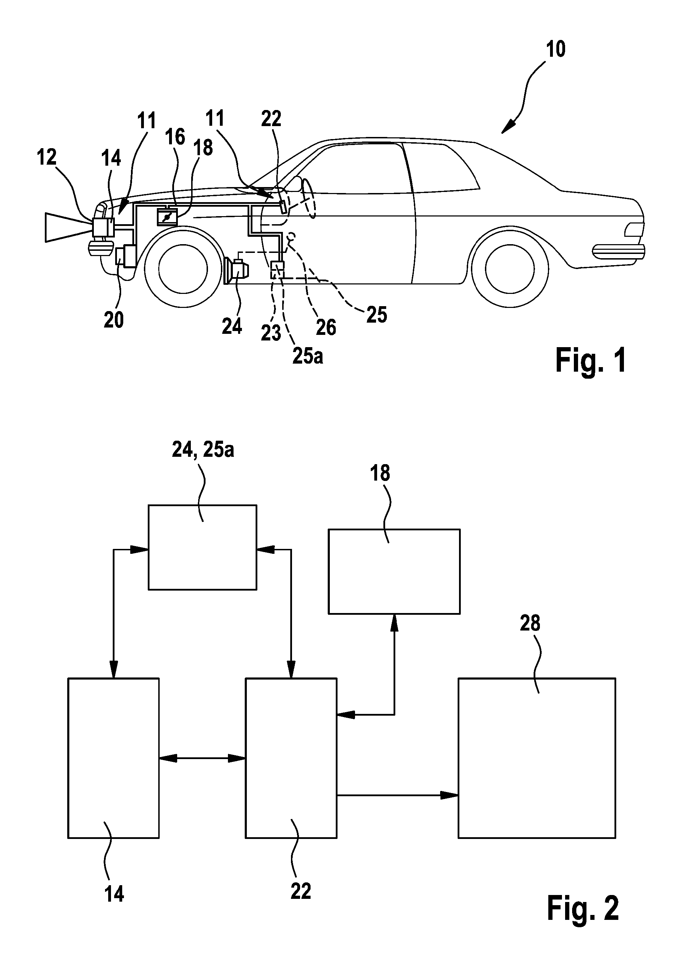

Das in Fig. 1 gezeigte Kraftfahrzeug 10 mit einem ACC-System bzw. einer adaptiven Geschwindigkeitsregelvorrichtung 11 weist als Abstandssensor 12 einen an der Frontpartie des Kraftfahrzeugs 10 angebrachten Radarsensor auf, in dessen Gehäuse auch eine ACC-Steuereinheit 14 untergebracht ist. Die ACC-Steuereinheit 14 ist über einen Datenbus 16 (CAN, MOST oder dergleichen) mit einer elektronischen Antriebs-Steuereinheit 18, einer Bremssystem-Steuereinheit 20 sowie mit einer HMI-Steuereinheit 22 einer Mensch/Maschine-Schnittstelle verbunden. In weiteren nicht dargestellten Ausführungsbeispielen könnten die ACC-Steuereinheit 14 und die HMI-Steuereinheit 22 auch in einer Steuereinrichtung der adaptiven Geschwindigkeitsregelvorrichtung 11, insbesondere in einem gemeinsamen Gehäuse integriert sein.

Der Abstandssensor 12 misst mit Hilfe eines Mehrstrahlradars die Abstände, Relativgeschwindigkeiten und Azimutwinkel von vor dem Kraftfahrzeug 10 befindlichen Objekten, die Radarwellen reflektieren. Die in regelmäßigen Zeitabständen, z. B. alle 10 ms empfangenen Rohdaten werden in der ACC-Steuereinheit 14 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 18 und die Bremssystem-Steuereinheit 20 regelt die ACC-Steuereinheit 14 als Einrichtung zur Bestimmung des Beschleunigungs- und Verzögerungsbedarfs die Geschwindigkeit des Fahrzeugs 10. Die Mensch/Maschine-Schnittstelle, die durch die HMI-Steuereinheit 22 gesteuert wird, umfasst verschiedene Bedienungs- und Anzeigeelemente im Innenraum bzw. auf dem Armaturenbrett des Kraftfahrzeugs 10 und dient unter anderem dazu, Bedienbefehle des Fahrers an die ACC-Steuereinheit 14 zu übermitteln und Meldungen der ACC-Steuereinheit 14 an den Fahrer auszugeben. Zu diesem Zweck kann die HMI-Steuereinheit 22 auch einen Lautsprecherausgang für akustische Signale oder synthetische Sprache aufweisen. Wenn kein vorausfahrendes Fahrzeug geortet wird, regelt die ACC-Steuereinheit 14 die Geschwindigkeit des Fahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfasst worden, so wird die Geschwindigkeit des Kraftfahrzeugs 10 so geregelt, dass ein angemessener Abstand zu dem vorausfahrenden Fahrzeug eingehalten wird. Im gezeigten Beispiel weist das Kraftfahrzeug 10, ein Handschaltgetriebe 24 mit einem Schalthebel 26 sowie eine Kupplung 23 mit einem Kupplungspedal 25 und einem Kupplungswegsensor 25a auf (stark vereinfacht bzw. schematisch dargestellt). Die HMI-Steuereinheit 22 wird beispielsweise durch einen Mikrocomputer mit einem Mikroprozessor gebildet und ist grundsätzlich so programmiert, dass sie eine Schaltaufforderung an den Fahrer ausgibt, wenn die von Hand gewählte Getriebestufe nicht optimal ist.

Wie Fig. 2 zeigt, erhält die HMI-Steuereinheit 22 verschiedene Signale (durch entsprechende Pfeile angedeutet) von der ACC-Steuereinheit 22 und von der Antriebs-Steuereinheit 18. Außerdem erhalten die ACC-Steuereinheit 14 und die HMI-Steuereinheit 22 von dem Handschaltgetriebe 24 ein Signal, das die derzeit eingelegte Getriebestufe angibt und ein Signal des Kupplungswegsensors bzw. ein Signal, welches dem momentanen Zustand des Kupplungspedals 25 entspricht. Anhand dieser Informationen entscheidet die HMI-Steuereinheit 22, ob über eine Anzeige- bzw. Ausgabeeinrichtung 28 eine Schaltaufforderung für eine andere Getriebestufe bzw. einen anderen Getriebegang an den Fahrer auszugeben ist oder nicht. Die Ausgabeeinrichtung 28 ist beispielsweise auf dem Armaturenbrett des Fahrzeugs angeordnet und kann in einer Leuchtanzeige bestehen, die in ein anderes Anzeigeinstrument, beispielsweise den Tachometer, Drehzahlmesser oder dergleichen integriert ist.

Das erfindungsgemäße Verfahren zur Überwachung eines Zustands der Kupplung 23 eines Kraftfahrzeugs 10 mit Handschaltgetriebe 24 ist als Computerprogramm auf der ACC-Steuereinheit 14 der adaptiven Geschwindigkeitsregelvorrichtung 11 realisiert und läuft dort im Rahmen eines Verfahrens zur Steuerung der adaptiven Geschwindigkeitsregelvorrichtung 11 ab, wobei auch andere Lösungen - wie beispielsweise eine nicht dargestellte Implementierung des Verfahrens auf einem Motorsteuergerät des Kraftfahrzeugs 10 - selbstverständlich in Frage kommen. Das Computerprogramm ist in einem Speicherelement der ACC-Steuereinheit gespeichert. Durch Abarbeitung auf einem Mikroprozessor des ACC-Steuereinheit wird das Verfahren ausgeführt. Das Computerprogramm kann auf einem computerlesbaren Datenträger (Diskette, CD, DVD, Festplatte, USB-Memorystick, Speicherkarte oder dergleichen) oder einem Internetserver als Computerprogrammprodukt gespeichert sein und von dort aus in das Speicherelement der ACC-Steuereinheit übertragen werden. Nachfolgend wird das erfindungsgemäße Verfahren im Zusammenhang mit einer adaptiven Geschwindigkeitsregelvorrichtung 11 beschrieben. Eine entsprechende Überwachung der Kupplung 23 des Kraftfahrzeugs 10 kann jedoch auch ohne ein adaptive Geschwindigkeitsregelvorrichtung 11 vorteilhaft sein.

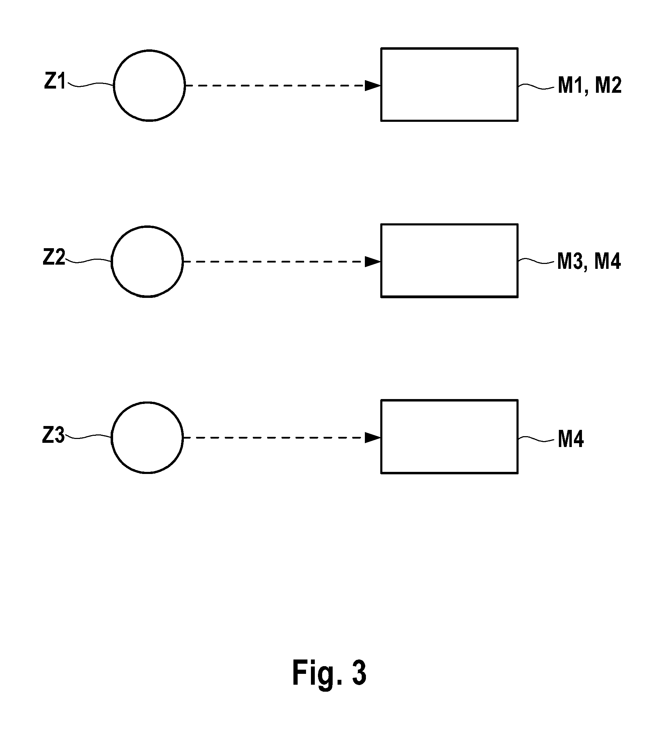

Bei dem erfindungsgemäßen Verfahren zur Überwachung des Zustands der Kupplung 23 des Kraftfahrzeugs 10 mit Handschaltgetriebe 24, wird wenigstens einer der nachfolgenden, in Fig. 3 stark vereinfacht dargestellten, Zustände Z1, Z2, Z3 der Kupplung 23 erkannt. Geeignete Gegenmaßnahmen M1, M2, M3, M4 nach einer Erkennung eines entsprechenden Zustands Z1, Z2, Z3 sind in Fig. 3 ebenfalls gezeigt.

Ein Abrutschen des Fahrers von dem Kupplungspedal 25 wird als Zustand Z1 erkannt, wenn eine Beschleunigung des Kupplungspedals 25 über einem vorgegebenen Schwellwert liegt und/oder wenn ein bestimmter Signalverlauf des Kupplungswegsignals des Kupplungswegsensors 25a vorliegt. Die maximale Beschleunigung des Kupplungspedals 25 ist durch die mechanische Auslegung (Feder, Dämpfer) vorgegeben. Bei normalen Anfahrvorgängen wird diese Beschleunigung durch die übliche Betätigung des Kupplungspedals 25 durch den Fahrer nicht erreicht. Erst wenn der Fahrer von dem Kupplungspedal 25 abrutscht, ergibt sich diese maximal mögliche Beschleunigung des Kupplungspedals 25, welche über Schwellwertbeobachtungen erkannt wird. Alternativ kann dazu auch ein erfasster Impuls herangezogen werden. Nachdem der Zustand Z1 durch das erfindungsgemäße Verfahren erkannt wurde, wird als Gegenmaßnahme M1 ein sofortiges Abbrechen der Antriebsmotormomentenvorgabe der adaptiven Geschwindigkeitsregelvorrichtung 11 und/oder als Gegenmaßnahme M2 eine Ansteuerung des Bremssystems 20 des Kraftfahrzeugs 10 derart durchgeführt, dass das Kraftfahrzeug 10 zum Stillstand kommt oder im Stillstand verbleibt, d. h. erst gar nicht in Bewegung kommen kann.

Eine insbesondere zu hohe Wärmebelastung der Kupplung 23 wird als Zustand Z2 erkannt, wenn eine direkt gemessene und/oder mittels wenigstens eines Kupplungsmodells indirekt über bereits bekannte Signale des Kraftfahrzeugs 10 geschätzte Temperatur der Kupplung 23 über eine vorgegebene Zeitdauer über einem vorgegebenen Schwellwert liegt und/oder wenn eine gemessene Steigung entlang einer durch das Kraftfahrzeug 10 zurückgelegten Strecke über einem vorgegebenen Schwellwert liegt (z. B. wenn das Kraftfahrzeug 0 m bei einer gemessenen Steigung von 10° zurücklegt). Eingangsgrößen derartiger Kupplungsmodelle sind hierbei Kupplungsweg, Antriebsmotordrehzahl, Getriebeeingangsdrehzahl, Umgebungstemperatur, Kühlwassertemperatur, Öltemperatur sowie Dauer des Kupplungsschleifvorgangs bzw. Durchschnittsgeschwindigkeit des Schleifvorgangs (z. B. wenn das Kraftfahrzeug 1 m innerhalb von 20 Sekunden mit aktiver Anfahrunterstützung zurücklegt). Der Missbrauch des Haltens des Kraftfahrzeugs 10 am Berg kann noch spezifischer erkannt werden, indem man die Steigung und die zurückgelegte Strecke berücksichtigt. Nachdem der Zustand Z2 durch das erfindungsgemäße Verfahren erkannt wurde, wird der Fahrer durch die Ausgabeeinrichtung 28 der adaptiven Geschwindigkeitsregelvorrichtung 11 über eine geeignete Rückmeldung als Gegenmaßnahme M3 auf die Fehlbedienung hingewiesen. Dies kann visuell, akustisch und/oder haptisch erfolgen. Zusätzlich wird die Anfahrunterstützungsfunktion der adaptiven Geschwindigkeitsregelvorrichtung 11 als Gegenmaßnahme M4, insbesondere temporär, deaktiviert, wobei ebenfalls eine entsprechende Rückmeldung an den Fahrer ausgegeben wird. Durch die Maßnahmen M3, M4 sollte der Fahrer auch lernen, derartige hohe Kupplungsbelastungen zukünftig zu vermeiden. Der Fahrer kann auch bei einem erkannten Missbrauch des Haltens der Kraftfahrzeugs 10 am Berg spezifischer auf diese Art der Fehlbedienung hingewiesen werden.

Ein fehlerhaftes Kupplungswegsignal wird als Zustand Z3 durch wenigstens eine Plausibilitätsprüfung erkannt. Dafür werden die nachfolgenden Plausibilitätsprüfungen herangezogen. Als erste Plausibilitätsprüfung wird bei vollem Auskuppeln ein Kraftstoffverbrauch des Kraftfahrzeugs 10 überprüft. Bei einem vollen Auskuppeln wirkt auf den Antriebsmotor kein Kupplungsmoment. Kraftstoff wird also lediglich aufgrund der Leerlaufregelung eingespritzt. Zusätzlich benötigter Kraftstoff lässt auf einen anderen Kupplungszustand schließen. Ebenfalls wird als zweite Plausibilitätsprüfung eine Korrelation eines gemessenen Kupplungsschleifpunkts mit einem vorgegebenen Kupplungsschleifpunkt überprüft. Der Kupplungsschleifpunkt bzw. der Kupplungsweg, bei welchem die Kupplung 23 zu schleifen beginnt, muss mit einem bestimmten vorgegebenen Kupplungsweg korrelieren. Der Schleifpunkt kann zusätzlich durch Beobachtung der Kraftstoffeinspritzmenge und Drehzahlen erkannt werden. Abweichungen lassen auf ein fehlerhaftes Kupplungssignal schließen. Des weiteren werden als dritte Plausibilitätsprüfung unrealistische Änderungen des Kupplungspedalwegs oder Beschleunigungen des Kupplungspedals 25 berücksichtigt. Hierbei können beispielsweise unmögliche bzw. unrealistische Beschleunigungswerte bzw. zu große Abstände oder Differenzen zwischen zwei aufeinander folgenden Werten ausgewertet werden. Die Anfahrunterstützungsfunktion der adaptiven Geschwindigkeitsregelvorrichtung 11 wird als Gegenmaßnahme M4, insbesondere temporär, deaktiviert, wobei ebenfalls eine geeignete Rückmeldung an den Fahrer ausgegeben wird. Um das Risiko einer Fehlfunktion zu reduzieren, wäre auch eine redundante Auslegung der Kupplungswegmessung sowie der Signalübertragung denkbar.

## Patentansprüche

1. Verfahren zur Überwachung eines Zustands (Z1,Z2,Z3) einer Kupplung (23) eines Kraftfahrzeugs (10) mit Handschaltgetriebe (24), wobei wenigstens einer der nachfolgenden Zustände (Z1,Z2,Z3) der Kupplung (23) erkannt wird:
- ein Abrutschen (Z1) des Fahrers von dem Kupplungspedal (25), wenn eine Beschleunigung des Kupplungspedals (25) über einem vorgegebenen Schwellwert liegt und/oder wenn ein bestimmter Signalverlauf des Kupplungswegsignals vorliegt;
- eine Wärmebelastung (Z2) der Kupplung (23), wenn eine direkt gemessene und/oder mittels wenigstens eines Kupplungsmodells indirekt geschätzte Temperatur der Kupplung (23) über eine vorgegebene Zeitdauer über einem vorgegebenen Schwellwert liegt und/oder wenn eine gemessene Steigung entlang einer durch das Kraftfahrzeug zurückgelegten Strecke über einem vorgegebenen Schwellwert liegt; und/oder
- ein fehlerhaftes Kupplungswegsignal (Z3) mittels wenigstens einer Plausibilitätsprüfung.

2. Verfahren nach Anspruch 1, **dadurch gekennzeichnet, dass** als Plausibilitätsprüfung zur Erkennung eines fehlerhaften Kupplungswegsignals (Z3) bei vollem Auskuppeln ein Kraftstoffverbrauch überprüft wird.

3. Verfahren nach Anspruch 1 oder 2, **dadurch gekennzeichnet, dass** als Plausibilitätsprüfung zur Erkennung eines fehlerhaften Kupplungswegsignals (Z3) eine Korrelation eines gemessenen Kupplungsschleifpunkts mit einem vorgegebenen Kupplungsschleifpunkt überprüft wird.

4. Verfahren nach Anspruch 1, 2 oder 3, **dadurch gekennzeichnet, dass** als Plausibilitätsprüfung zur Erkennung eines fehlerhaften Kupplungswegsignals (Z3) unrealistische Änderungen des Kupplungspedalwegs oder Beschleunigungen des Kupplungspedals (25) berücksichtigt werden.

5. Verfahren nach einem der Ansprüche 1 bis 4, **dadurch gekennzeichnet, dass** nach einer Erkennung eines Abrutschens (Z1) des Fahrers von dem Kupplungspedal (25) bei Vorhandensein einer adaptiven Geschwindigkeitsregelvorrichtung (11) an dem Kraftfahrzeug (10) ein sofortiges Abbrechen deren Antriebsmotormomentenvorgabe erfolgt und/oder eine Ansteuerung des Bremssystems (20) des Kraftfahrzeugs (10) derart erfolgt, dass das Kraftfahrzeug (10) zum Stillstand kommt oder im Stillstand verbleibt.

6. Verfahren nach einem der Ansprüche 1 bis 5, **dadurch gekennzeichnet, dass** nach einer Erkennung einer Wärmebelastung (Z2) der Kupplung (23) oder nach Erkennung eines fehlerhaften Kupplungswegsignals (Z3) der Fahrer über eine geeignete Rückmeldung auf die Fehlbedienung hingewiesen wird und/oder bei Vorhandensein einer adaptiven Geschwindigkeitsregelvorrichtung (11) an dem Kraftfahrzeug (10) deren Anfahrunterstützungsfunktion deaktiviert wird.

7. Verfahren nach einem der Ansprüche 1 bis 6, welches im Rahmen eines Verfahrens zur Steuerung einer adaptiven Geschwindigkeitsregelvorrichtung (11), insbesondere auf einer Steuereinrichtung (14) der adaptiven Geschwindigkeitsregelvorrichtung (11) ausgeführt wird.

8. Computerprogramm mit Programmcodemitteln, um ein Verfahren zur Überwachung eines Zustands (Z1,Z2,Z3) einer Kupplung (23) eines Kraftfahrzeugs (10) mit Handschaltgetriebe (24) gemäß einem der Ansprüche 1 bis 7 durchzuführen, wenn dass Programm auf einem Mikroprozessor eines Mikrocomputers, insbesondere auf einer Steuereinrichtung (14) einer adaptiven Geschwindigkeitsregelvorrichtung (11) des Kraftfahrzeugs (10), ausgeführt wird.

9. Computerprogrammprodukt mit Programmcodemitteln, die auf einem computerlesbaren Datenträger gespeichert sind, um ein Verfahren zur Überwachung eines Zustands (Z1,Z2,Z3) einer Kupplung (23) eines Kraftfahrzeugs (10) mit Handschaltgetriebe (24) gemäß einem der Ansprüche 1 bis 7 durchzuführen, wenn dass Programm auf einem Mikroprozessor eines Mikrocomputers, insbesondere auf einer Steuereinrichtung (14) einer adaptiven Geschwindigkeitsregelvorrichtung (11) des Kraftfahrzeugs (10), ausgeführt wird.

10. Adaptive Geschwindigkeitsregelvorrichtung (11) für Kraftfahrzeuge (10) mit Handschaltgetriebe (24), mit einer Einrichtung (14) zur Bestimmung des Beschleunigungsbedarfs, einer Ausgabeeinrichtung (28) zur Ausgabe von Informationen an den Fahrer, sowie einer Steuereinrichtung (22) hierfür, **dadurch gekennzeichnet, dass** die Steuereinrichtung (14) zur Ausführung eines Computerprogramms gemäß Anspruch 8 zur Durchführung eines Verfahrens zur Überwachung eines Zustands (Z1,Z2,Z3) einer Kupplung (23) des Kraftfahrzeugs (10) eingerichtet ist.
